# EUROPÄISCHE PATENTANMELDUNG

(11) **EP 3 553 608 A1**
(43) Veröffentlichungstag der Anmeldung: **16.10.2019**
(21) Anmeldenummer: 18166458.2
(22) Anmeldetag: 10.04.2018
(51) Int. Cl.: G05B 19/042, G05B 19/418

(54) **AUTOMATISIERUNGSANLAGE UND VERFAHREN ZUM BETREIBEN EINER AUTOMATISIERUNGSANLAGE**

(71) Anmelder: Siemens Aktiengesellschaft, 80333 München (DE)
(72) Erfinder: Dallmann, Michael, 90530 Wendelstein (DE); Graf, Rene, 90513 Zirndorf (DE)

(57) **Zusammenfassung**

Die Erfindung betrifft eine Automatisierungsanlage und ein Verfahren zum Betreiben einer Automatisierungsanlage. Hierbei weist die Automatisierungsanlage (10) eine erste Recheneinheit (11), eine zweite Recheneinheit (13) und eine erste technologische Komponente (12) auf. Hierbei ist die erste Recheneinheit (11) der ersten technologischen Komponente (12) zugeordnet und steuert eine erste Automatisierungsfunktion (21) der ersten technologischen Komponente (12). Ferner weist die erste Recheneinheit (11) während der Steuerung der ersten Automatisierungsfunktion (21) eine erste temporäre Ressource auf. Ferner weist die zweite Recheneinheit (13) eine zweite temporäre Ressource auf. Zusätzlich ist vorgesehen, dass die Automatisierungsanlage (10) einen Ressourcenmanager (25) aufweist, mit dem mindestens eine temporäre Ressourcen einer der Recheneinheiten (11, 13) in Abhängigkeit einer Auslastung mindestens einer technologischen Komponente (12) umverteilbar ist.

## Beschreibung

Die Erfindung betrifft eine Automatisierungsanlage nach dem Oberbegriff des Patentanspruchs 1. Ferner betrifft die vorliegende Erfindung ein Verfahren zum Betreiben einer Automatisierungsanlage.

Ausgehend von der Technologie Industrie 4.0 wird eine vermehrte Vernetzung von Einheiten, wie technologischer Komponenten, Sensoren, Kommunikationseinheiten und ähnliches innerhalb komplexer Automatisierungsanlagen angestrebt. Hierbei ist es notwendig, dass Komponenten unterschiedlicher Hersteller in einem Verbund zusammenarbeiten. Dies wird erschwert, da derzeit keine umfassenden Standardisierungen zur Technologie Industrie 4.0 existieren.

Aus der Sicht eines Betreibers einer Automatisierungsanlage ist es wünschenswert, die Komponenten der unterschiedlichen Hersteller einheitlich zu handhaben und zu steuern. Aus der Sicht der Anlagen- und Komponentenhersteller ist es wünschenswert, Teilbereiche einer komplex vernetzten Automatisierungsanlage autark testen und in Betrieb nehmen zu können, ohne auf zentrale Recheneinheiten des Anlagenbetreibers zugreifen zu müssen.

Diese Ansätze der Anlagenbetreiber und der Hersteller sind mit bisher eingesetzten Cloud-Lösungen schwer zu erfüllen. Ein Grund hierfür ist, dass derzeit zentrale Serverfarmen eingesetzt werden, die einzelne Komponenten einer Automatisierungsanlage zentral steuern, wobei Eigenschaften und Parameter einzelner Komponenten in dieser zentralen Einheit hinterlegt sind, beispielsweise als zentraler Server. Dies beutet, dass der Betreiber der Automatisierungsanlage jeweils zentral Änderungen in der Parametrierung und Steuerung vornehmen muss, sobald Komponenten eines anderen Herstellers verwendet werden sollen. Dieser zentrale Ansatz hat den Nachteil, dass zentral die Änderung vorgenommen werden muss und gegebenenfalls die gesamte Automatisierungsanlage durch die zentrale Struktur der Recheneinheiten neu zu konfigurieren ist.

Demnach ergibt sich eine Aufgabe der Erfindung, eine Automatisierungsanlage und ein Verfahren zum Betreiben einer Automatisierungsanlage bereitzustellen, bei der Komponenten unterschiedlicher Hersteller autark entwickelt und getestet werden können und dennoch innerhalb eines Gesamtsystems einfach verwendet werden können.

Die Aufgabe wird durch eine Automatisierungsanlage mit den Merkmalen gemäß Patentanspruch 1 gelöst. Ferner wird die Aufgabe der Erfindung mit einem Verfahren zum Betreiben einer Automatisierungsanlage gemäß den Merkmalen des Patentanspruchs 10 gelöst.

Erfindungsgemäß wird eine Automatisierungsanlage mit einer ersten Recheneinheit, einer zweiten Recheneinheit und einer erste technologischen Komponente vorgeschlagen. Recheneinheiten können in Form von Prozessrechnern mit einem oder mehreren Prozessoren oder Servern vorliegen. Unter einer technologischen Komponente ist eine Einheit zu verstehen, die eine Automatisierungsfunktion oder mehrere Automatisierungsfunktionen (F1, F2, F3, F4, F5) bereitstellt. Eine technologische Komponente kann beispielsweise eine Robotervorrichtung sein, die mit Sprühdüsen ausgestattet ist, um ein Automobilteil in einer Fertigungsstraße zu lackieren. Eine weitere technologische Komponente kann anschließend das Trocknen des lackierten Automobilteils hervorrufen, indem diese technologische Komponente Luftdüsen bereitstellt. Jede der technologischen Komponenten wird hierbei von einer eigenen Recheneinheit gesteuert, die vorzugsweise als Teil der technologischen Komponente in unmittelbarer örtlicher Nähe installiert ist.

Es ist erfindungsgemäß vorgesehen, dass die erste Recheneinheit der ersten technologischen Komponente zugeordnet ist und eine erste Automatisierungsfunktion der ersten technologischen Komponente steuert. Hierbei weist die die erste Recheneinheit während der Steuerung der ersten Automatisierungsfunktion eine erste temporäre Ressource auf. Dies bedeutet, dass die erste Recheneinheit nicht genutzte Kapazitäten aufweist, die sie selbst momentan nicht nutzen kann. Ferner ist erfindungsgemäß vorgesehen, dass die zweite Recheneinheit eine zweite temporäre Ressource aufweist. Die zweite temporäre Ressource kann eine Unterkapazität sein, also eine negative Ressource. Diese negative Ressource vermindert beispielsweise eine Bearbeitungsgeschwindigkeit oder verzögert einen Startzeitpunkt der zweiten Automatisierungsfunktion. Durch die Umverteilung von temporären Ressourcen ist es möglich, dass eine erste Recheneinheit bei Überlastung auf eine zweite Recheneinheit mit Überkapazitäten zugreifen kann und zumindest Teile ihrer Automatisierungsfunktion an die zweite Recheneinheit auslagert und diese zweite Recheneinheit die ausgelagerten Teilfunktionen temporär bearbeitet. Temporäre Auslagerungen können Software-Prozeduren oder einzelnen Programmteile einer Automatisierungsfunktion sein, beispielsweise, um einen Parameter zu berechnen. Somit kann durch eine temporäre Umverteilung von Ressourcen eine Automatisierungsfunktion verbessert ausgeführt werden.

Ferner ist erfindungsgemäß vorgesehen, dass die Automatisierungsanlage einen Ressourcenmanager aufweist, mit dem mindestens eine temporäre Ressource einer der Recheneinheiten in Abhängigkeit einer Auslastung mindestens einer technologischen Komponente umverteilbar ist. Dies bedeutet, dass der Ressourcenmanager dafür sorgt, dass vorhandene Ressourcen besser genutzt werden, indem Überkapazitäten und Unterkapazitäten von installierten Recheneinheiten in der Automatisierungsanlage erkannt werden. Der Ressourcenmanager koordiniert die temporären Kapazitäten der Recheneinheiten und weist zusätzliche Ressourcen einer mit Unterkapazitäten behafteten Recheneinheit zeitlich begrenzt zu. Diese Zuordnung geschieht situativ und richtet sich nach der Auslastung einzelner technologischer Komponenten und deren Recheneinheiten. Hierzu werden die Auslastung jeder einzelnen Recheneinheit und die momentan ausgeführte Automatisierungsfunktion der technologischen Komponente vom Ressourcenmanager überwacht und in der Umverteilung berücksichtigt. Der Ressourcenmanager kann eine zyklische Überwachung durchführen, beispielweise im Millisekundenbereich, so dass möglichst schnell und in Echtzeit auf Engpässe und Nichtauslastung bezüglich der Recheneinheiten reagiert werden kann.

Es werden demnach durch den Ressourcenmanager Über- und Unterkapazitäten der einzelnen Recheneinheiten in Abhängigkeit der momentan benötigten Ressourcen erkannt und umverteilt. Die Umverteilung richtet sich demnach nach der momentanen Auslastung der Recheneinheiten. Die Umverteilung ist dynamisch und kann jederzeit durch den Ressourcenmanager geändert werden.

Es wird daher ermöglicht, dass beispielsweise eine Automatisierungsfunktion mit benötigter hoher Ressource eine Zuteilung einer Zusatzressource von einer anderen Recheneinheit erhält, ohne dass die eigentliche Automatisierungsfunktion von der zweiten Recheneinheit gesteuert wird. Es wird demnach eine Ressource angefordert, die eine andere Recheneinheit gerade temporär zur Verfügung stellen kann. Somit wird es möglich, dass eine Automatisierungsfunktion beispielsweise schneller oder sofort ausgeführt werden kann, auch wenn die ihr zugeordnete Recheneinheit gerade eine Unterkapazität hat. Eine Umverteilung von Ressourcen ist möglich, da beispielsweise zeitglich die erste Recheneinheit eine Überkapazität hat, d.h. freie temporäre Ressourcen aufweist, während zur gleichen Zeit die zweite Recheneinheit eine Unterkapazität aufweist, d.h. die zweite temporäre Ressource ist negativ. Hierbei ist unter einem temporären Zustand der Ressourcen eine zeitlich vorrübergehenden Zustand zu verstehen, der sich jederzeit ändern kann, d.h. jede Recheneinheit kann zeitlich gesehen Über- oder Unterkapazitäten aufweisen. Dieser Zustand hängt von der Auslastung jeder Recheneinheit und von der momentan ausgeführten Automatisierungsfunktion der dazugehörigen technologischen Komponente ab.

Durch die Umverteilung von Ressourcen durch den Ressourcenmanager müssen auch keine zusätzlichen Reserven im Gesamtsystem der Automatisierungsanlage bereitgestellt werden, da zwischen den einzelnen Recheneinheiten der technologischen Komponenten die Kapazitäten vorrübergehend umverteilt werden können. Es ist somit möglich, dass eine komplex vernetzte Automatisierungsanlage wie gewünscht autark getestet werden kann, ohne auf zentrale Recheneinheiten des Anlagenbetreibers zugreifen zu müssen. Es sind hierzu in zentralen Recheneinheiten bzw. einem Zentralserver keine Veränderungen durch die vorliegende Erfindung notwendig.

In einer bevorzugten Ausführungsform kann vorgesehen werden, dass die zweite Recheneinheit eine Redundanzeinheit ist. Hierbei stellt die Redundanzeinheit zusätzlich Ressourcen bereit, ohne dass diese einer technologischen Komponente zugeordnet ist. Insbesondere bei kleinen Automatisierungsanlagen, die eine geringe Anzahl von installierten Recheneinheiten aufweisen, bietet sich eine Verwendung eines Redundanzrechners auf. Je höher die Anzahl der installierten Recheneinheiten in einer Automatisierungsanlage ist, desto wahrscheinlicher kann auch eine temporäre Unterkapazität sein, da die viele Komponenten aus Sicherheitsgründen überdimensioniert ausgelegt werden und nicht alle Recheneinheiten gleichzeitig ausgelastet sind.

In einer weiteren Ausführungsform kann mit Vorteil vorgesehen werden, dass die zweite Recheneinheit eine Recheneinheit ist, die einer zweiten technologischen Komponente zugordnet ist und eine zweite Automatisierungsfunktion der zweiten technologischen Komponente steuert.

Demnach sind die erste und die zweite Recheneinheit jeweils einer technologischen Komponente zugeordnet. Eine Zuordnung kann örtlich sein, d.h. in unmittelbarer örtlicher Nähe der technologischen Komponente. Auch ist es möglich, dass die Recheneinheit Teil der technologischen Komponente ist und in dieser integriert ist. Die Zuordnungen geschehen dadurch, dass jede Recheneinheit nur eine einzige technologische Komponente steuert, auch wenn Ressourcen umverteilt werden.

Bevorzugt ist die temporäre Ressource einer Recheneinheit eine Rechenleistung und/oder eine Speicherkapazität. Die Rechenleistung hängt mit der Ausstattung der Recheneinheit und deren Prozessoren ab. Hierbei können unterschiedliche Rechenleistungen in Abhängigkeit der Anzahl der Prozessoren und deren Taktfrequenz bereitgestellt werden. Es kann vorgesehen werden, dass die Automatisierungsanlage mit Komponenten verschiedener Hersteller oder mit Komponenten verschiedenen Herstellungsalters bestückt ist. Durch unterschiedliche Technologien können sich auch unterschiedliche Rechenleistungen ergeben. Diese Unterschiede in Rechenleistung können durch die Umverteilung von temporären Ressourcen ausgeglichen werden. Vorteilhafterweise wird die Speicherkapazität bei der Umverteilung alleine oder zusammen mit der Rechenleistung berücksichtigt. Es kann nämlich bei hoher Rechenleistung auch zu Unterkapazitäten von Speicherkapazität kommen. Somit können Speicher in anderen Rechnereinheiten genutzt werden, um Automatisierungsfunktionen verbessert ausführen zu können, beispielsweise schneller oder zu einem gewünschten Zeitpunkt.

In einem vorteilhaften Ausführungsbeispiel kann vorgesehen werden, dass eine der Rechnereinheiten den Ressourcenmanager aufweist. Der Ressourcenmanager wird demnach nicht als übergeordnete Einheit verwendet, sondern ist innerhalb einer Recheneinheit integriert. Der Ressourcenmanager kann die einzelnen Auslastungen der Recheneinheiten überwachen und in Echtzeit koordinieren. Dies bedeutet, er kann schnell auf sich ändernde Verhältnisse bezüglich der Recheneinheiten und deren Rechen- und/oder Speicherkapazitäten reagieren. Der Ressourcenmanager kann in Form einer Softwarekomponente bereitgesellt werden, die im Bedarfsfall auch auf eine andere Recheneinheit übertragen werden kann. Ein Bedarfsfall tritt beispielsweise ein, wenn die Recheneinheit geplant abgeschaltet werden soll, die weiteren Recheneinheiten jedoch weiterarbeiten sollen. Ferner kann auch vorgesehen werden, dass der Ressourcenmanager Teil einer Redundanzrecheneinheit ist. Ferner kann vorgesehen werden, dass jede Recheneinheit einen Ressourcenmanager aufweist, wobei nur ein Ressourcenmanager in der Automatisierungsanlage aktiv ist. Sollte dieser ausfallen, wird dies von den anderen Recheneinheiten erkannt und eine der Recheneinheiten aktiviert in diesem Falle den vorinstallierten Ressourcenmanager und übernimmt ohne Ausfall die weitere Koordination und Umverteilung der Ressourcen.

Alternativ hierzu kann der Ressourcenmanager auch als separate Instanz bzw. als übergeordnete Einheit verwendet verwendet werden, die nicht innerhalb einer Recheneinheit integriert ist. Bei der Wahl des Ortes des Ressourcenmanagers kann die Struktur der Automatisierungsanlage berücksichtigt werden, so dass beispielsweise der Ressourcenmanager dort installiert ist, wo die Ausfallwahrscheinlichkeit der technischen Komponente niedrig ist bzw. die technische Komponente geringe Ausfallzeiten wegen z.B. Wartungsarbeiten hat.

Ferner kann bevorzugter Weise vorgesehen werden, dass die Recheneinheiten einen lokalen Rechnerverbund bilden, der eine gemeinsame Kommunikationsverbindung aufweist, über die die Recheneinheiten miteinander lokal verbunden sind. Vorzugsweise sind die Recheneinheiten über einen lokalen Datenbus miteinander verbunden, der echtzeitfähig ist. Lokal bedeutet in diesem Zusammenhang, dass die Recheneinheiten örtlich in der Automatisierungsanlage installiert sind und nicht in einer herkömmlichen Cloud dezentral vorhanden sind.

Vielmehr wird mit der vorliegenden Lösung eine lokale Cloud vorgeschlagen, die insbesondere als private Cloud nutzbar ist Die lokale Cloud kann auch als spontane Cloud bzw. On-Premise Cloud verstanden werden. Hierbei verbleibt die vollständige Kontrolle über die Rechnereinheiten bei dem Betreiber der Automatisierungsanlage. Der Betreiber kann hierbei alle produktions- und geschäftskritischen Daten selbst verwalten. Ferner kann der Betreiber eine eigenständige Software-Pflege durchführen. Dies vereinfacht auch eine Implementierungsprozedur bei der Erweiterung oder dem Ersetzen von technologischen Komponenten innerhalb der Automatisierungsanlage. Hierbei ist die Anpassungsfähigkeit eines On-Premise-Systems in der Regel größer als bei Cloud-Diensten.

In einer bevorzugten Ausführungsform kann vorgesehen werden, dass die Automatisierungsanlage eine Produktionsanlage ist.

Vorzugsweise werden die Produktionsanlagen im industriellen Umfeld eingesetzt. Automatisierungsanlagen, insbesondere Produktionsanlagen, können in voneinander getrennte Abschnitte eingeteilt werden, wobei jeder Abschnitt für eine Automatisierungsaufgabe oder einen Produktionsschritt eingesetzt werden kann. Die Abschnitte werden durch sogenannte Knotenpunkte unterteilt.

Die voneinander getrennten Produktionsschritte werden in diesem Zusammenhang als Abschnitt verstanden, der eine technologische Komponente aufweist. Hierbei bilden eine technologische Komponente und eine Recheneinheit eine Einheit innerhalb eines Abschnittes. Die Recheneinheit steuert die technologische Komponente und steuert somit einen Automatisierungsabschnitt mit mindestens einer Automatisierungsfunktion. Automatisierungsfunktionen sind beispielsweise PLC-Funktionen (PLC = Programmable Logic Controller), MOM-Funktionen (MOM = Manufacturing Operations Management) oder HMI-Funktionen (HMI = Human Machine Interface). Dies bedeutet, dass jede technologische Komponente eine lokale Recheneinheit aufweist, die autark, d.h. ohne weitere Datenkommunikation mit weiteren externen Geräten außerhalb des Produktionsabschnitts, den Automatisierungsabschnitt bzw. Produktionsabschnitt handhaben kann.

Wird beispielsweise eine Verpackung hergestellt, so kann eine Automatisierungsfunktion ein Scheiden eines Kartonmaterials sein. Eine weitere Automatisierungsfunktion ist beispielsweise das Falten des Kartons zu einer Verpackung Hierbei können die Automatisierungsfunktionen für die Herstellung eines Produkts zeitlich hintereinander ausgeführt werden. Ferner kann das unfertige Produkt von einer Automatisierungsstation mit einer jeweiligen Automatisierungsfunktion zur nächsten Automatisierungsstation weitergeleitet werden. In einem solchen Fall liegt eine Hintereinanderschaltung von Automatisierungsfunktionen vor.

Alternativ hierzu kann auch eine Parallelproduktion stattfinden, d.h. eine Arbeitsstation mit einer Vielzahl von Automatisierungsfunktionen führt alle oder zumindest eine Mehrzahl von Automatisierungsschritten innerhalb einer Produktion durch. Dies ist beispielsweise bei einer 3D-Druckmaschine (3D = dreidimensional) der Fall. Eine erste Automatisierungsfunktion druckt einen dreidimensionalen Körper, eine zweite Automatisierungsfunktion führt eine Qualitätskontrolle des dreidimensionalen Körpers durch, ohne dass das gedruckte Produkt an eine weitere Arbeitsstation weitergeleitet wird. Hierbei weist die 3D-Druckmaschine eine Mehrzahl von technologischen Komponenten auf, die die jeweiligen Automatisierungsfunktionen durchführen.

In einer vorteilhaften Ausgestaltungsform kann vorgesehen werden, dass die Automatisierungsanlage technologische Komponenten aufweist, die identische Automatisierungsfunktionen aufweisen.

Eine solche Konstellation ergibt sich beispielsweise bei dem Paralleleinsatz von 3D-Druckmaschinen in einer Produktionsanlage. Hierbei wird beispielsweise zur Verminderung der Produktionszeiten zeitgleich an jeder der 3D-Druckmaschine ein identisches dreidimensionales Druckerzeugnis hergestellt. Die Erfindung kann somit auch für eine Parallelfertigung verwendet werden, wobei die Startzeiten der Produktion durch den Ressourcenmanager koordiniert werden.

In diesem Beispiel wird eine einzige technologische Komponente verwendet, nämlich eine 3D-Druckmaschine bzw. ein 3D-Drucker mit einer Recheneinheit, um ein Druckprodukt in mehreren Teilprozessen herzustellen. Hierbei kann eine Vielzahl von 3D-Druckern innerhalb der Produktionsanlage installiert sein, die jeweils das gleiche Produkt fertigen. Nach dem Druckvorgang nimmt jeder der 3D-Drucker auch eine Qualitäts-überprüfung vor. Die Qualitätsprüfung kann hierbei mehr Rechenleistung als die eigentliche Fertigung bzw. das 3D-Drucken benötigen. Es können somit Engpässe bzw. Unterkapazitäten an Rechenleistung und/oder Speicherkapazität entstehen, wenn alle 3D-Drucker gleichzeitig eine Qualitätsprüfung durchführen würden.

Demnach führen alle installierten 3D-Drucker der Produktionsanlage identische Automatisierungsfunktionen durch, um ein identisches Endprodukt herzustellen. Mit Vorteil kann vorgesehen werden, dass die identischen Automatisierungsfunktionen mit dem Ressourcenmanager zeitlich versetzt einleitbar sind. Zum gleichen Zeitpunkt werden unterschiedliche Ressourcen an den 3D-Druckern benötigt, so dass eine Umverteilung von Ressourcen durch den Ressourcenmanager möglich ist.

Der Ressourcenmanager kann die Ressourcen der einzelnen 3D-Drucker koordinieren, so dass nicht alle 3D-Drucker gleichzeitig eine Qualitätsprüfung durchführen. Der Ressourcenmanager kann demnach den Startzeitpunkt einer Automatisierungsfunktion festlegen. Ferner kann der Ressourcenmanager innerhalb der Produktionsanlage die Ressourcen, d.h. die Über- und Unterkapazitäten, umverteilen. Dies bedeutet, dass ein 3D-Drucker, der in seiner Rechen- und/oder Speicherkapazität nicht während des Druckens ausgelastet ist, Ressourcen als Überkapazität einem oder einer Vielzahl von weiteren Recheneinheiten der Produktionsanlage zur Verfügung stellen. Umgekehrt erhält dieser 3D-Drucker bei seiner Qualitätsüberprüfung Ressourcen in Form von Überkapazitäten von anderen Recheneinheiten der Produktionsanlage, beispielsweise von Recheneinheiten eines oder mehrerer 3D-Druckern.

Ferner wird die Aufgabe der vorliegenden Erfindung mit einem Verfahren gemäß Patentanspruch 10 gelöst.

Erfindungsgemäß wird ein Verfahren zum Betreiben einer Automatisierungsanlage vorgeschlagen, das folgende Schritte aufweist: Bereitstellen einer ersten Recheneinheit, Bereitstellen einer ersten technologischen Komponente, Steuern einer ersten Automatisierungsfunktion der ersten technologischen Komponente mit der ersten Recheneinheit, Bereitstellen einer zweiten Recheneinheit und Überwachen von temporären Ressourcen der Recheneinheiten. Ferner weist das erfindungsgemäße Verfahren ein Umverteilen einer temporären Ressource einer der Recheneinheiten in Abhängigkeit einer Auslastung mindestens einer technologischen Komponente auf.

Hierbei wird unter Umverteilen einer temporären Ressource verstanden, dass einer Recheneinheit eine freie Ressource oder zumindest ein Teil einer zur Verfügung stehenden Ressource zur Verfügung gestellt wird. Es werden demnach Ressourcen zeitlich vorrübergehend, d.h. temporär, neu zugeordnet, bzw. anderen Recheneinheiten vorrübergehend zur Verfügung gestellt. Dies hat den Vorteil, dass das die Recheneinheit einer technologischen Komponente nicht überdimensioniert zu sein braucht bzw. temporäre Überkapazitäten durch eine oder mehrere weitere Recheneinheiten anderer technologischer Ressourcen zur Verfügung gestellt werden.

Nachfolgend werden bevorzugte Ausführungsformen der Erfindung unter Bezug auf die Zeichnung näher beschrieben. Hierbei zeigen:
FIG 1 ein erstes Ausführungsbeispiel einer Automatisierungsanlage gemäß der vorliegenden Erfindung; und
FIG 2 ein zweites Ausführungsbeispiel einer Automatisierungsanlage gemäß der vorliegenden Erfindung.

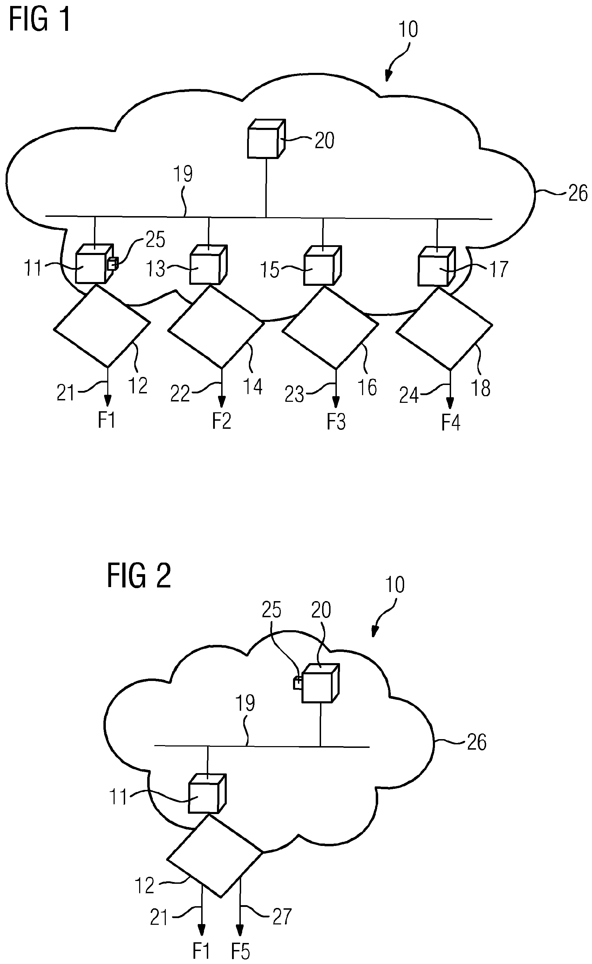

FIG 1 und FIG 2 zeigen jeweils Ausführungsbeispiele einer Automatisierungsanlage in unterschiedlicher Konfiguration, wobei einzelne Merkmale der Ausführungsbeispiele auch in das jeweils andere Ausführungsbeispiel übernommen werden können.

FIG 1 zeigt eine Automatisierungsanlage 10 mit einer Vielzahl von Recheneinheiten 11, 13, 15, 17, wobei jeder Recheneinheit 11, 13, 15, 17 jeweils einer technologische Komponente 12, 14, 16, 18 zugeordnet ist. Jede Recheneinheit ist einer technologischen Komponente zugeordnet und führt für diese technologische Komponente eine Automatisierungsfunktion 21, 22, 23, 24 durch. Ferner ist es auch möglich, dass eine technologische Komponente 12 mehrere Automatisierungsfunktionen 21, 27 aufweist, die von der zugeordneten Recheneinheit 11 beispielsweise zeitlich hintereinander ausgeführt werden, was in FIG 2 schematisch dargestellt. Eine Zusammenschaltung der Recheneinheiten 11, 13, 15, 17 innerhalb der Automatisierungsanlage 10 erfolgt über eine Kommunikationsverbindung 19, im vorliegenden Fall über einen Datenbus. Alternativ oder ergänzend zu einem Datenbus können die Recheneinheiten 11, 13, 15, 17 über eine Funkverbindung miteinander verbunden sein.

Die Automatisierungsanlage 10 des Ausführungsbeispiels der FIG 1 weist eine Vielzahl von technologischen Komponenten 12, 14, 16, 18 auf, deren Anzahl im vorliegenden Ausführungsbeispiel nur beispielhaft skizziert ist. Die Automatisierungsanlage 10 der FIG 1 weist ferner eine optionale Redundanzeinheit 20 auf, die ebenfalls über die Kommunikationsverbindung 19 mit den Recheneinheiten 11, 13, 15, 17 verbunden ist. Ferner weist eine der Recheneinheiten 11 einen Ressourcenmanager 25 auf, der die temporären Ressourcen der Automatisierungsanlage 10 überwacht und Über- und Unterkapazitäten zwischen den einzelnen Recheneinheiten 11, 13, 15, 17 temporär umverteilt.

Die Redundanzeinheit 20 kann als Redundanzrechner ausgebildet sein, der alle Aufgaben einer Recheneinheit übernehmen kann. Dies ist von Vorteil, wenn eine Recheneinheit ausfällt, so dass die Automatisierungsanlage 10 oder zumindest betroffene Abschnitte der Automatisierungsanlage 10 nicht gestoppt werden müssen. Die Redundanzeinheit 20 ist auf der gleichen Hierarchieebene installiert wie die übrigen Recheneinheiten 11, 13, 15, 17 und übernimmt bei Unterkapazitäten einer oder mehrere Recheneinheiten oder bei Wartungsarbeiten von Recheneinheiten die vollständige Funktionsfähigkeit der abgeschalteten Recheneinheit. Die Redundanzeinheit 20 kann auch als Reserve-Server oder Reserve-Rechner für Cloud-Dienste verstanden werden. Allerdings nicht im herkömmlichen Sinne einer Cloud-basierten Lösung für eine Automatisierungsanlage. Vielmehr wird als Ausführungsbeispiel der vorliegenden Erfindung eine On-Premise Cloud vorgeschlagen.

Bei bisher bekannten Ausführungsformen wird in einer Cloud eine Vielzahl von Servern installiert, die als Serverfarm verwendet werden. Die Server erfüllen hierbei gemeinsam eine oder mehrere Funktionen innerhalb einer Automatisierungsanlage. Bei herkömmlichen Cloud-basierten Lösungen ist einer technologischen Komponente kein einzelner Server oder eine Recheneinheit direkt zugeordnet. Auch ist bei dieser herkömmlichen Lösung nicht vorgesehen, einen entsprechenden Server lokal an der technologischen Komponente zu installieren. Ferner unterscheidet sich die erfindungsgemäße Lösung auch von einer herkömmlichen Master-Slave Struktur in einem Automatisierungssystem, da alle Rechnereinheiten 11, 13, 15, 17, 20 einschließlich der Rechnereinheit 20 als Redundanzeinheit und der Rechnereinheit 11 mit dem Ressourcenmanager 25 auf gleicher Hierarchieebene arbeiten.

Insgesamt wird in FIG 1 eine Automatisierungsanlage 10 bereitgestellt, die einen Rechnerverbund 26 mit den Recheneinheiten 11, 13, 15, 17, 20 aufweist, wobei die Recheneinheiten 11, 13, 15, 17 der technologischen Komponenten 11, 13, 15, 17 jeweils eine Automatisierungsfunktion 21, 22, 23, 24 bereitstellen. Der Rechnerverbund 26 kann als On-Premise Cloud, d.h. als spontane Cloud-Struktur verstanden werden.

FIG 1 zeigt ein Ausführungsbeispiel mit einem Rechen-Cluster bzw. einem Computing Cluster innerhalb einer On-Premise-Cloud. Hierbei ist jeder einzelnen technologischen Komponente jeweils einer Recheneinheit bzw. einem Server zugeordnet. Die Zuordnung geschieht sowohl örtlich wie auch funktionell. Dies bedeutet, dass die technologischen Komponenten zusammen mit ihrer Recheneinheit eine geschlossene Einheit bildet, wobei diese Einheit autark eine Automatisierungsfunktion ausführen kann. Die Einheiten sind über eine Kommunikationsverbindung miteinander verbunden. Zusätzlich wird in dem Ausführungsbeispiel der FIG 1 ein optionaler Server 20 verwendet, der lediglich für Redundanz in Bezug auf Rechenleistung und Speicherkapazität sorgt. Der zusätzliche Server 20 übernimmt jedoch keine zentrale Funktion, wie dies beispielsweise bei einer Masterfunktion oder zentrale Steuer- oder Überwachungsfunktion der Fall wäre.

Der Rechnerverbund 26 wird durch den Ressourcenmanager 25 koordiniert, indem Ressourcen der einzelnen Recheneinheiten 11, 13, 15, 17, 20 umverteilt werden können. Die Koordination erfolgt zeitlich dynamisch und in Abhängigkeit der Auslastung der einzelnen Recheneinheiten 11, 13, 15, 17. Durch Überwachung der einzelnen Recheneinheiten 11, 13, 15, 17, 20 und deren Auslastung können dynamisch Über- und Unterkapazitäten durch den Ressourcenmanager umverteilt werden. Die Umverteilung und Zuordnung von freien Ressourcen an Recheneinheiten, die Ressourcen benötigen, erfolgt bevorzugter Weise temporär, da die zur Verfügung stehenden Ressourcen typischerweise auch nur temporär zur Verfügung stehen. Auf diese Weise können ungenutzte Rechenleistungen und/oder Speicherkapazitäten in der Automatisierungsanlage 10 über mehrere Instanzen genutzt werden. Dies bedeutet, dass Ressourcen über einzelne Maschinen mit einer Recheneinheit und einer technologischen Komponente umverteilt werden. Der Ressourcenmanager 25 kann hierzu Sensoren und/oder Überwachungsmittel aufweisen, um eine Auslastung der einzelnen technologischen Komponenten und deren Recheneinheit sowie die vorhandene Redundanzeinheit 20 zu überwachen.

FIG 2 zeigt ein zweites Ausführungsbeispiel der vorliegenden Erfindung mit einer einzigen technologischen Komponente 12 in einer Automatisierungsanlage 10. Der technologischen Komponente 12 ist eine Recheneinheit 11 oder ein Server zugeordnet, die die technologische Komponente 11 überwacht und steuert bzw. regelt. Ferner ist die Recheneinheit 11 der technologischen Komponente 12 an eine Kommunikationsverbindung 19 der Automatisierungsanlage 10 angeschlossen, beispielsweise an einen Datenbus. An diesem Datenbus 19 ist eine zusätzliche Recheneinheit 20 oder ein Server angeschlossen, der als Redundanzeinheit 20 verwendet wird. Diese Redundanzeinheit 20 kann von der Recheneinheit 11 Automatisierungsfunktionen 21, 27 teilweise oder vollständig übernehmen. Beispielsweise wird die erste Automatisierungsfunktion 21 von der Recheneinheit 11 selbst durchgeführt, beispielsweise ein 3D-Drucken eines Produktes. Die zweite Automatisierungsfunktion 27, beispielsweise eine Qualitätskontrolle eines 3D-Druckers, wird zwischen den Recheneinheiten 11, 20 durch einen in der Resonanzeinheit 20 vorhandenen Ressourcenmanager 25 koordiniert bzw. aufgeteilt. Auf diese Weise wird eine Überdimensionierung der Recheneinheit 11 vermieden. Es wird demnach Rechenleistung und/oder Speicherkapazität durch die Redundanzeinheit 20 übernommen, die lokal innerhalb der Automatisierungsanlage 10 installiert ist.

### Bezugszeichenliste

- 10: Automatisierungsanlage
- 11: Recheneinheit
- 12: technologischen Komponente
- 13: Recheneinheit
- 14: technologischen Komponente
- 15: Recheneinheit
- 16: technologischen Komponente
- 17: Recheneinheit
- 18: technologischen Komponente
- 19: Kommunikationsverbindung
- 20: Redundanzeinheit
- 21: Automatisierungsfunktion
- 22: Automatisierungsfunktion
- 23: Automatisierungsfunktion
- 24: Automatisierungsfunktion
- 25: Ressourcenmanager
- 26: Rechnerverbund
- 27: Automatisierungsfunktion

## Patentansprüche

1. Automatisierungsanlage (10) aufweisend
eine erste Recheneinheit (11);
eine zweite Recheneinheit (13); und
eine erste technologische Komponente (12);
wobei die erste Recheneinheit (11) der ersten technologischen Komponente (12) zugeordnet ist und eine erste Automatisierungsfunktion (21) der ersten technologischen Komponente (12) steuert,
wobei die erste Recheneinheit (11) während der Steuerung der ersten Automatisierungsfunktion (21) eine erste temporäre Ressource aufweist;
wobei die zweite Recheneinheit (13) eine zweite temporäre Ressource aufweist;
**dadurch gekennzeichnet, dass** die Automatisierungsanlage (10) einen Ressourcenmanager (25) aufweist, mit dem mindestens eine temporäre Ressource einer der Recheneinheiten (11, 13) in Abhängigkeit einer Auslastung mindestens einer technologischen Komponente (12) umverteilbar ist.

2. Automatisierungsanlage (10) nach Anspruch 1, **dadurch gekennzeichnet, dass** die zweite Recheneinheit (13) eine Redundanzeinheit (20) ist.

3. Automatisierungsanlage nach Anspruch 1 oder Anspruch 2, **dadurch gekennzeichnet, dass** die zweite Recheneinheit (13) eine Recheneinheit ist, die einer zweiten technologischen Komponente (14) zugordnet ist und eine zweite Automatisierungsfunktion (22) der zweiten technologischen Komponente (14) steuert.

4. Automatisierungsanlage (10) nach einem der Ansprüche 1 bis 3, **dadurch gekennzeichnet, dass** die temporäre Ressource eine Rechenleistung und/oder eine Speicherkapazität ist.

5. Automatisierungsanlage (10) nach einem der Ansprüche 1 bis 4, **dadurch gekennzeichnet, dass** eine der Rechnereinheiten (11, 13, 15, 17) den Ressourcenmanager (25) aufweist.

6. Automatisierungsanlage (10) nach einem der Ansprüche 1 bis 5, **dadurch gekennzeichnet, dass** die Recheneinheiten (11, 13, 15, 17) einen lokalen Rechnerverbund (18) bilden, der eine gemeinsame Kommunikationsverbindung (19) aufweist, über die die Recheneinheiten (11, 13, 15, 17) miteinander lokal verbunden sind.

7. Automatisierungsanlage (10) nach einem der Ansprüche 1 bis 6, **dadurch gekennzeichnet, dass** die Automatisierungsanlage (10) eine Produktionsanlage ist.

8. Automatisierungsanlage (10) nach einem der Ansprüche 1 bis 7, **dadurch gekennzeichnet**, die Automatisierungsanlage (10) technologische Komponenten (12, 14, 16, 18) aufweist, die identische Automatisierungsfunktionen (21, 22, 23, 24) aufweisen.

9. Automatisierungsanlage (10) nach Anspruch 8, **dadurch gekennzeichnet, dass** die identischen Automatisierungsfunktionen (21, 22, 23, 24) mit dem Ressourcenmanager (25) zeitlich versetzt einleitbar sind.

10. Verfahren zum Betreiben einer Automatisierungsanlage (10) aufweisend
Bereitstellen einer ersten Recheneinheit (11);
Bereitstellen einer ersten technologischen Komponente (12); Steuern einer ersten Automatisierungsfunktion (21) der ersten technologischen Komponente (12) mit der ersten Recheneinheit (11) ;
Bereitstellen einer zweiten Recheneinheit (13); **gekennzeichnet durch**
Überwachen von temporären Ressourcen der Recheneinheiten (11, 13) ;
Umverteilen einer temporären Ressource in Abhängigkeit einer Auslastung mindestens einer technologischen Komponente (12).
